# FASCICULE DE BREVET EUROPEEN

(11) **EP 2 656 488 B1**
(45) Date de publication et mention de la délivrance du brevet: **11.08.2021**
(21) Numéro de dépôt: 11794475.1
(22) Date de dépôt: 08.12.2011
(51) Int. Cl.: H02K 5/24

(54) **SUPPORT MOTEUR A DECOUPLAGE AMELIORE POUR SYSTEME DE VENTILATION**
MOTORTRÄGER MIT VERBESSERTER ENTKOPPLUNG FÜR EIN BELÜFTUNGSSYSTEM
MOTOR MOUNT WITH IMPROVED DECOUPLING FOR VENTILATION SYSTEM

(30) Priorité: 20.12.2010 FR 1004963
(43) Date de publication de la demande: 30.10.2013
(73) Titulaire: Valeo Systemes Thermiques, 78321 Le Mesnil Saint Denis (FR)
(72) Inventeur: TRUILLET, Franck, F-28410 Bu (FR); CHERIAUX, Olivier, F-28210 Nogent Le Roi (FR); DROULEZ, Eric, F-92150 Suresnes (FR); COZIC, Ronan, F-28110 Luce (FR); CLERGEON, Sébastien, F-61 110 Verrieres (FR); LEGOT, Laurent, F-75020 Paris (FR); NAJI, Said, F-78990 Elancourt (FR); DUPUTEL, Patrick, F-95240 Cormeilles En Parisis (FR); VINCENT, Philippe, F-28230 Epernon (FR)
(74) Mandataire: Tran, Chi-Hai
(86) Numéro de dépôt international: PCT/EP2011/072232
(87) Numéro de publication internationale: WO 2012/084538

(56) Documents cités:
- FR-A1- 2 711 459
- FR-A3- 2 679 394
- None

## Description

L'invention se rapporte au domaine des dispositifs de support de moteur pour système de ventilation, chauffage et/ou climatisation pour véhicule automobile. Plus particulièrement, l'invention porte sur un groupe moto-ventilateur pour une installation de ventilation d'un véhicule.

Dans un système de ventilation, chauffage et/ou climatisation, le flux d'air y circulant est propulsé par une roue de pulseur mise en rotation par un moteur. La mise en œuvre de la roue de pulseur et du moteur crée des vibrations. Ces vibrations sont à l'origine de nuisances sonores et vibratoires (dont du balourd) dans l'habitacle du véhicule. Les vibrations sont transmises via le support moteur à l'ensemble du système de ventilation, chauffage et/ou climatisation et créent des ondes acoustiques gênantes pour le confort des passagers du véhicule.

Le document FR 2 711 459 est considéré comme l'état de la technique le plus proche de l'objet de la revendication 1. Pour à cela, des moyens de découplage ont été disposés entre le moteur et le support moteur. Ces moyens de découplage ne sont efficaces (en vibrations) que pour une certaine bande de fréquences et ne permettent pas d'empêcher la transmission de toutes les vibrations au système de ventilation, chauffage et/ou climatisation. Or, lorsqu'un moteur entraîne une roue de pulseur, plusieurs phénomènes s'additionnent et provoquent des vibrations sur toute la plage fréquentielle. En premier lieu, le balourd de la roue provoque un mouvement radial du moteur qu'il faut éviter. Deuxièmement, un phénomène de pompage du à l'aspiration de l'air par la roue de pulseur ainsi qu'à la déformation de la roue provoque un mouvement axial du moteur. Enfin, le moteur entraînant par rotation la roue de pulseur, un mouvement de tangage ou mouvement dit tangentiel du moteur est créé.

La difficulté est augmentée par le fait que les tailles, les puissances et les technologies de moteur varient d'un fabricant à l'autre, provoquant ainsi une signature vibro-acoustique propre à chaque type de moteur. Il serait alors souhaitable que chaque type de moteur soit monté dans un support adapté à cette signature.

L'inconvénient d'une telle situation réside dans l'absence de standardisation des supports qui reçoivent chaque type de moteur. Une telle multiplicité de supports provoque des difficultés de gestion et de logistique qu'il est souhaitable de réduire du point de vue des fabricants d'installation de ventilation et de chauffage pour véhicule automobile.

L'invention vient améliorer la situation de ces fabricants.

Le but de la présente invention est donc de résoudre les inconvénients décrits ci-dessus principalement en concevant un support moteur qui atteint un haut niveau d'isolation vibratoire, utilisable pour des types de moteur électrique différents grâce une combinaison dimensionnelle de la position et de la longueur du moyen de découplage par rapport à un plan passant par le centre de gravité du moteur, cette combinaison formant un bon compromis pour couvrir tous les types de moteur électrique du marché actuel.

L'invention a donc pour objet un groupe moto-ventilateur pour une installation de ventilation d'un véhicule selon la revendication 1.

Avantageusement, le support comprend trois plots de découplage répartis selon un décalage angulaire sensiblement régulier, étant égal à 120°.

Avantageusement encore, le moyen de découplage relie une base à une bague dans laquelle est logé le moteur électrique, ladite bague présentant une première face qui s'étend selon l'axe longitudinal, ladite base présentant une deuxième face qui s'étend selon l'axe longitudinal, le moyen de découplage étant interposé entre la première face et la deuxième face.

Selon une variante, le moyen de découplage présente une section en « H », avantageusement dans le plan médian.

L'invention est exposée dans l'ensemble des revendications annexées. Les modes de réalisation et / ou exemples de la description suivante qui ne sont pas couverts par les revendications annexées sont considérés comme ne faisant pas partie de la présente invention.

Un autre avantage réside dans le haut niveau de performance vibro-acoustique, c'est-à-dire diminution des vibrations liées au balourd et diminution du bruit lié au moteur, atteint par un même support moteur utilisé pour une pluralité de types de moteur.

D'autres caractéristiques, détails et avantages de l'invention ressortiront plus clairement à la lecture de la description donnée ci-après à titre indicatif en relation avec des dessins dans lesquels :
- la figure 1 est une vue en coupe d'un groupe moto-ventilateur incorporant le support et le moteur selon l'invention,
- la figure 2 est une vue de côté de la figure 1.

Il faut noter que les figures exposent l'invention de manière détaillée pour mettre en œuvre l'invention, lesdites figures pouvant bien entendu servir à mieux définir l'invention le cas échéant.

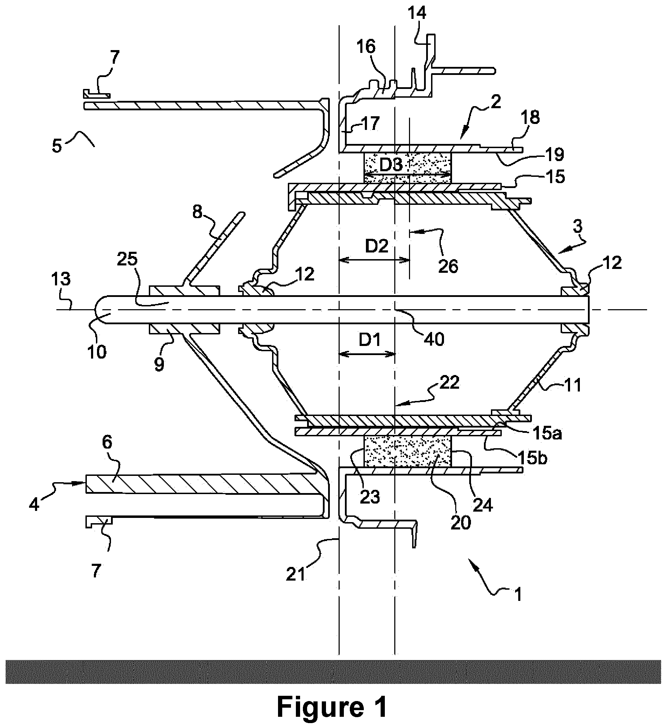

La figure 1 illustre un groupe moto-ventilateur 1 qui comprend un support 2 logeant un moteur électrique 3. Le groupe moto-ventilateur comprend également une roue de pulseur ou turbine 4. Cette dernière aspire l'air par une face ouverte 5 puis l'évacue par le côté selon une direction perpendiculaire à la direction d'entrée de l'air au travers de la face ouverte 5.

Cette turbine comprend une série de pales 6 jointes à leur extrémité libre par un bandeau 7. Ces pales 6 prennent naissance sur un bord périphérique externe d'un bol 8, ce dernier pouvant par exemple être plein ou ajouré. Au centre de ce bol est prévu un moyeu 9 dont la fonction est de relier mécaniquement la turbine 4 à un arbre 10 constitutif du moteur 3.

Le moteur électrique 3 entraîne en rotation la turbine 4 de sorte à mettre en mouvement un flux d'air dans l'installation de ventilation du véhicule. Le moteur électrique comprend une cage 11 qui délimite un volume interne du moteur, ce dernier comprenant des composants (non représentés) tels que par exemple un stator, un rotor et un ensemble de porte-balai et balais.

Le moteur 3 comprend l'arbre 10 qui traverse la cage 11 de part en part selon un axe 13 qualifié de longitudinale, comme définissant la longueur du moteur 3. Cet arbre 10 est porté par un ou deux paliers et/ou un ou deux roulements 12 et/ou une combinaison d'un palier avec un roulement, chacun situé à chaque extrémité de la cage 11. L'arbre 10 débouche d'un côté du moteur de manière plus importante que l'autre côté constituant ainsi une zone 25 de l'arbre 10 qui forme la partie de l'arbre 10 qui passe au travers du moyeu 9 de sorte à entraîner en rotation la turbine 4.

Le support 2 est fabriqué à partir d'un matériau plastique et comprend une base 14 et une bague 15 dans laquelle est logé le moteur électrique 3.

La bague 15 est délimitée par une paroi interne 15a et par une paroi externe ou première face 15b. La paroi interne 15a est tournée vers l'arbre 10 alors que la première face 15b est tournée vers la base 14. Cette bague 15 sert de dispositif de maintien du moteur électrique 3. Ce maintien est assuré de manière isostatique entre le moteur 3 et la bague 15, sauf pour le cas des phases de montage et démontage du moteur vis-à-vis de la bague 15.

La base 14 forme l'élément qui relie le groupe moto-ventilateur 1 à l'installation de ventilation du véhicule (non représentée). Cette base 14 comprend une paroi périphérique externe 16 à partir de laquelle s'étend un bord 17. La paroi périphérique externe 16 s'assemble sur une volute (non représentée). A l'opposé de la paroi périphérique 16 par rapport au bord 17, on trouve une bague intermédiaire 18, cette dernière étant formée de manière concentrique avec la paroi périphérique externe 16.

Le bord 17 s'étend dans un plan perpendiculaire à l'axe longitudinal 13. Ce plan est matérialisé par la référence 21. Quand la turbine 4 est montée sur l'arbre 10, le bord de turbine, d'ou les pales 6 naissent, est écarté du bord 17 d'une valeur de 3 millimètres.

La base 14 présente une deuxième face 19 qui s'étend selon l'axe longitudinal 13, cette deuxième face étant tournée vers l'axe longitudinal. Dans cet exemple de réalisation, la deuxième face 19 est constituée par une face interne de la bague intermédiaire 18.

Un moyen de découplage 20 est installé entre cette face interne, ou deuxième face 19, de la bague intermédiaire 18 et une face externe de la bague 15, appelé première face 15b. Les vibrations générées par le moteur électrique 3 sont ainsi amorties par le moyen de découplage et sont donc fortement atténuées afin de n'être pratiquement plus perceptibles sur la base 14.

Le moteur électrique 3 est partagé par une ligne référencée 22 transversale à l'axe longitudinal 13 et qui passe par un centre de gravité du moteur électrique 3, référencé sur cette figure 40. Cette ligne 22, appelé ligne d'équilibre de masse, passe par un plan qui divise le moteur électrique 3 en deux parties de poids égal. La ligne d'équilibre de masse peut s'inscrire dans un plan perpendiculaire à l'axe longitudinal 13 passant par le centre de gravité 40.

La variabilité de type de moteur électrique conduit à installer ces derniers dans le support de manière différente. Cette différence apparaît notamment dans le placement de la ligne d'équilibre de masse 22 du moteur par rapport au plan 21 qui passe par le bord 17. Ce placement, ici une distance selon l'axe longitudinal 13, est matérialisé sur cette figure par la référence D1.

Les moteurs électriques dont le poids est faible, par exemple inférieur à 1000g, sont installés dans le support moteur 2 de sorte que leur ligne d'équilibre de masse 22 soit située à une distance comprise entre 11 et 18 millimètres du plan 21. Les moteurs électriques dont le poids est intermédiaire, c'est-à-dire compris entre 1000g et 1100g, sont installés dans le support moteur 2 de sorte que leur ligne d'équilibre de masse 22 soit située à une distance comprise entre 14 et 22 millimètres du plan 21. Les moteurs électriques dont le poids est important, c'est-à-dire au-delà de 1100g, sont installés dans le support moteur 2 de sorte que leur ligne d'équilibre de masse 22 soit située à une distance comprise entre 17 et 25 millimètres du plan 21

On comprend que l'invention fait le choix spécifique de placer les moteurs électriques dans le support de telle sorte que la distance D1 qui sépare leur ligne d'équilibre de masse 22 par rapport au plan 21 est comprise entre 11 et 25 millimètres et peut prendre toutes valeurs comprises dans cette plage, en fonction du poids du moteur.

Le moyen de découplage 20 présente une première extrémité 23 du côté de la zone 25 de l'arbre 10 qui reçoit la turbine 10 et une deuxième extrémité 24 opposée à la première extrémité 23 par rapport au plot formant un moyen de découplage. Ces deux extrémités 23 et 24 caractérisent une dimension du moyen de découplage 20 selon une direction parallèle à l'axe longitudinal 13. Dans le cas présent, cette distance forme une longueur du moyen de découplage 20, référencée D3 sur la figure 1.

Cette longueur D3 peut ainsi être comprise entre 15 et 40 millimètres.

De manière plus détaillée, quand la ligne d'équilibre de masse 22 du moteur électrique 3 est située à 17 millimètres ou moins du plan 21, la longueur D3 du moyen de découplage 20 est comprise entre 15 millimètres et 25 millimètres. Quand la ligne d'équilibre de masse 22 du moteur électrique 3 est située entre 17 et 22 millimètres du plan 21, la longueur D3 du moyen de découplage 20 est comprise entre 18 millimètres et 32 millimètres, et quand la ligne d'équilibre de masse 22 du moteur électrique 3 est située à plus de 22 millimètres du plan 21, la longueur D3 du moyen de découplage 20 est comprise entre 23 millimètres et 40 millimètres. Bien entendu, l'invention n'est pas limitée à ces trois exemples et la longueur D3 du moyen de découplage 20 peut prendre toutes valeurs comprises dans cette plage, en fonction de la distance D1.

Autrement dit, la longueur D3 du moyen de découplage répond à une fonction de la distance D1, c'est-à-dire la distance qui sépare le plan 21 de la ligne d'équilibre de masse 22 passant par le centre de gravité 40.

La position du moyen de découplage 20 par rapport au support 2 prend également une importance pour l'invention. Le moyen de découplage 20 présente un plan médian perpendiculaire à l'axe longitudinal 13 et ce plan médian définit la position selon l'axe longitudinal 13 du moyen de découplage 20 vis-à-vis du support 2. Ce plan médian, référencé 26, sépare virtuellement dans la longueur le moyen de découplage 20 en deux parties de longueurs identiques.

La détermination de la distance D2 du moyen de découplage est liée à la position de la ligne d'équilibre de masse 22, définie par la distance D1. Cette distance D2 varie ainsi en fonction du poids du moteur, puisque la distance D1 est fonction du poids du moteur.

En fonction du moteur utilisé, le plan médian 26 peut être situé d'un côté ou de l'autre de la ligne d'équilibre de masse 22, c'est-à-dire du côté de la zone 25 de réception de la turbine 4 ou de l'autre côté du moteur par rapport à la ligne d'équilibre de masse 22.

La variation de positionnement du moyen de découplage conduit à localiser le plan médian 26 à une distance comprise entre 0 et 7 millimètres de la ligne d'équilibre de masse 22, c'est-à-dire au maximum 7 millimètres d'un côté de la ligne d'équilibre de masse ou 7 millimètres de l'autre côté de la ligne d'équilibre de masse. L'étendue de cette plage de valeurs est ainsi égale à 14 millimètres. En prenant un autre référentiel, le plan médian 26 est distant du plan 21 passant par le bord 17 d'une valeur D2 comprise entre 4 et 32 millimètres.

On notera cependant qu'une position du plan médian 26 du côté opposé à la zone 25 par rapport à la ligne d'équilibre de masse 22 est avantageuse car elle offre des performances vibro-acoustiques satisfaisantes sur une large gamme de moteurs électriques de type différent.

De manière plus précise, le plan médian 26 est compris entre 0 (zéro) et 5 millimètres de la ligne d'équilibre de masse 22 quand celle-ci est comprise entre 11 et 18 millimètres du plan 21.

Quand la ligne d'équilibre de masse 22 est distante du plan 21 d'une valeur comprise entre 14 et 22 millimètres, alors le plan médian 26 est distant de la ligne d'équilibre de masse 22 d'une valeur comprise entre 2 et 6 millimètres.

Enfin, quand la ligne d'équilibre de masse 22 est distante du plan 21 d'une valeur comprise entre 17 et 25 millimètres, le plan médian 26 est alors distant de la ligne d'équilibre de masse 22 d'une valeur comprise entre 3 et 7 millimètres.

On comprend donc de ce qui précède que la position longitudinale par rapport au support du moyen de découplage, ainsi qu'une dimension de ce moyen de découplage selon l'axe longitudinal, notamment sa longueur, sont déterminées par rapport à la position de la ligne d'équilibre de masse du moteur versus le support. L'invention couvre ainsi une relation particulière entre la position et la longueur du moyen de découplage 20 et la position de la ligne d'équilibre de masse du moteur électrique, autrement dit le poids du moteur. Dans une amélioration de l'invention, un paramètre de durée de vie du moyen de découplage 20 peut également être pris en considération pour déterminer la longueur de ce moyen, sans pour autant dégrader significativement les performances en termes d'isolation vibratoire. Pour allonger sa durée de vie, le moyen de découplage peut présenter une raideur obtenue soit par allongement du moyen de découplage, soit par une augmentation d'épaisseur, soit par un changement de caractéristique physique du matériau, plus importante que celle strictement requise par la détermination liée à la position de la ligne d'équilibre de masse.

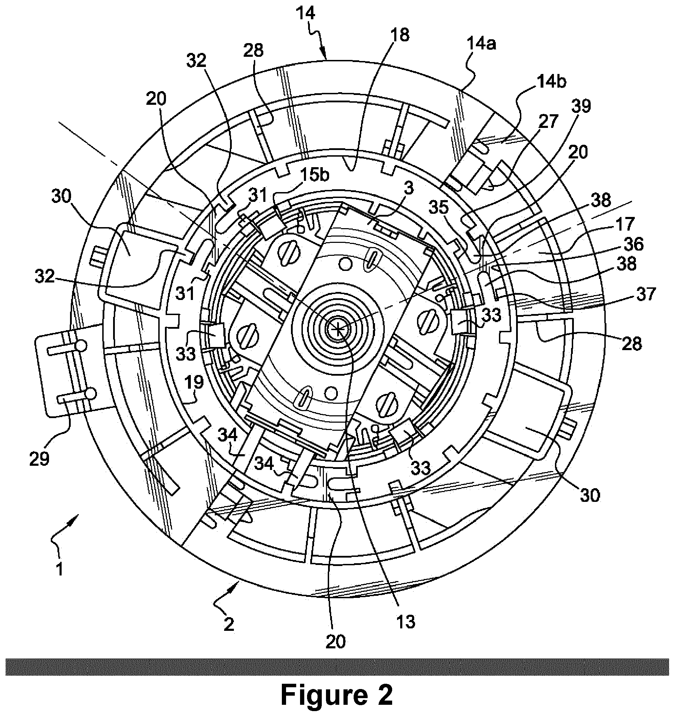

La figure 2 illustre le groupe moto-ventilateur vue du côté gauche de la figure 1, c'est-à-dire vue du côté de la turbine, cette dernière étant absente de la figure 2.

La base 14 présente une forme circulaire constituée par deux sous-ensembles 14a et 14b en forme de demi-cercle qui sont joints plat sur plat et qui présentent des contre-formes 27 assurant le centrage d'un sous-ensemble par rapport à l'autre.

Le bord 17 supporte des nervures de renforts 28 réparties périphériquement sur le bord et qui s'étendent dans un plan parallèle à l'axe longitudinal 13. Le bord 17 comprend encore deux évidements 30 opposés l'un à l'autre par rapport à l'axe longitudinal 13. La paroi périphérique externe 16 comprend une excroissance 29 qui forme butée de montage du support 2 sur la volute de l'installation de ventilation. La bague intermédiaire 18 forme quant à elle un tube de section circulaire ouvert à chacune de ces extrémités.

On notera que la paroi périphérique 16, la bague intermédiaire 18 et la bague 15 sont de forme tubulaire et installés de manière concentrique.

La base 14 est reliée à la bague 15 par trois moyens de découplage 20 qui sont installés de manière à former un angle α de 120° entre chaque moyen de découplage 20. Ce moyen de découplage est monté dans un logement sur la première face 15b, ce logement étant délimité par des rainures 31. Ce moyen de découplage est également solidarisé sur la deuxième face 19, par exemple par un surmoulage dans un logement bordé par des nervures 32.

Dans un plan perpendiculaire à l'axe longitudinal 13, la section du moyen de découplage 20 forme un « H ». Ce moyen de découplage 20 est un plot parallélépipédique comprenant un premier côté 35 en contact direct avec la bague 15 du support moteur, en particulier par collage, clippage ou surmoulage sur la première face 15b.

Le moyen de découplage comprend un deuxième côté 36 en contact direct avec la bague intermédiaire 18 du support moteur et un troisième côté 37 libre s'étendant parallèlement à l'axe longitudinal 13 du moteur électrique 3. Le troisième côté 37 présente au moins un évidement 38 s'étendant selon une direction parallèle à l'axe longitudinal 13.

Le moyen de découplage 20 comprend un quatrième côté 39 présentant lui aussi au moins un évidement 38.

La largeur du moyen de découplage est la distance mesurée entre un fond de l'évidement 38 pratiqué dans le troisième côté 37 et un fond de l'évidement 38 pratiqué dans le quatrième côté 39. Cette largeur est avantageusement comprise entre 3 et 5 millimètres.

La structure spécifique du moyen de découplage assure l'isolation vibratoire entre le moteur électrique 3 et le support 2 quelque soit le type de vibrations provoquées par la mise en œuvre du moteur et de la roue de pulseur. Ainsi, les vibrations de type axial et de type tangentiel sont absorbées par le moyen de découplage 20. L'évidement 38 créé selon une direction parallèle à l'axe longitudinale 13 confère une souplesse du plot flexible par rapport à une contrainte axiale et par rapport à une contrainte tangentielle tout en conservant une rigidité du plot par rapport à une contrainte radiale. Une telle conformation du moyen de découplage 20 combinée à un positionnement longitudinal et une longueur déterminés selon l'invention offrent un support 2 très efficace en termes d'isolation vibratoire pour une pluralité de types de moteur électrique différents.

Le moteur électrique 3 est maintenu dans le volume interne de la bague 15 qui forme un tube ouvert à chaque extrémité. Le déplacement du moteur électrique selon l'axe longitudinal 13 est bloqué par des butées 33 issues de moulage avec la bague 15, au niveau d'une tranche formant l'une des extrémités de la bague 15.

Le moteur 3 est alimenté électriquement depuis l'extérieur du support 2 par deux conducteurs 34.

L'invention décrite ci-dessus couvre le positionnement et la longueur d'au moins un moyen de découplage 20 parmi trois moyens de découplage décalés angulairement de 120°. Il va de soi de l'invention couvre également le cas dans lequel une pluralité de moyens de découplage est installée conformément à l'objet de la revendication 1.

## Revendications

1. Groupe moto-ventilateur (1) pour une installation de ventilation d'un véhicule comprenant :
- Un support (2) dans lequel est logé un moteur électrique (3) qui présente un arbre (10) s'étendant selon un axe longitudinal (13), l'arbre (10) comprenant une zone (25) apte à recevoir une turbine (4), ledit moteur (3) présentant une ligne d'équilibre de masse (22) transversale à l'axe longitudinal (13) et passant par un centre de gravité (40) du moteur électrique, ledit support (2) étant relié au moteur (3) par une pluralité de moyens de découplage (20) répartis à la périphérie du moteur, la position longitudinale (D2) par rapport au support (2) d'au moins un moyen de découplage (20) et une dimension (D3) de ce moyen de découplage (20) selon l'axe longitudinal (13) sont déterminées par rapport à la ligne d'équilibre de masse (22) relativement au support (2),
**caractérisé en ce que** ledit support (2) comprenant un bord (17) qui s'étend dans un plan (21) du côté de ladite zone (25) par rapport à la ligne d'équilibre de masse (22), dans lequel la ligne d'équilibre de masse (22) et le plan (21) sont distants d'une valeur (D1) comprise entre 11 et 25 millimètres,
dans lequel une distance selon l'axe longitudinal (13) qui sépare la ligne d'équilibre de masse (22) et un plan médian (26) du moyen de découplage (20) est comprise entre 0 et 7 millimètres, et dans lequel :
le plan médian (26) est compris entre 0 et 5 millimètres de la ligne d'équilibre de masse (22) quand celle-ci est comprise entre 11 et 18 millimètres du plan (21), le poids du moteur électrique étant inférieur à 1000 g,
le plan médian (26) est distant de la ligne d'équilibre de masse (22) d'une valeur comprise entre 2 et 6 millimètres quand la ligne d'équilibre de masse (22) est distante du plan (21) d'une valeur comprise entre 14 et 22 millimètres, le poids du moteur électrique étant compris entre 1000g et 1100g,
le plan médian (26) est distant de la ligne d'équilibre de masse (22) d'une valeur comprise entre 3 et 7 millimètres quand la ligne d'équilibre de masse (22) est distante du plan (21) d'une valeur comprise entre 17 et 25 millimètres, le poids du moteur électrique étant au-delà de 1100g,
le plan médian (26) s'étendant du côté opposé à la zone (25) par rapport à la ligne d'équilibre de masse (22),
- une turbine (4) montée sur l'arbre (10) du moteur électrique (3) ;
dans lequel la dimension (D3) selon l'axe longitudinal (13) forme une longueur du moyen de découplage (20) comprise entre 15 et 40 millimètres,
la longueur (D3) du moyen de découplage (20) étant comprise entre 15 millimètres et 25 millimètres quand la ligne d'équilibre de masse (22) du moteur électrique (3) est située à 17 millimètres ou moins du plan (21),
la longueur (D3) du moyen de découplage (20) étant comprise entre 18 millimètres et 32 millimètres quand la ligne d'équilibre de masse (22) du moteur électrique (3) est située entre 17 et 22 millimètres du plan (21),
la longueur (D3) du moyen de découplage (20) étant comprise entre 23 millimètres et 40 millimètres quand la ligne d'équilibre de masse (22) du moteur électrique (3) est située à plus de 22 millimètres du plan (21).

2. Groupe moto-ventilateur (1) selon la revendication 1, comprenant trois moyens de découplage (20) répartis selon un décalage angulaire de 120°.

3. Groupe moto-ventilateur (1) selon l'une quelconque des revendications précédentes, dans lequel le moyen de découplage (20) relie une base (14) à une bague (15) dans laquelle est logé le moteur électrique (3), ladite bague (15) présentant une première face (15b) qui s'étend selon l'axe longitudinal (13), ladite base (14) présentant une deuxième face (19) qui s'étend selon l'axe longitudinal (13), le moyen de découplage (20) étant interposé entre la première face (15b) et la deuxième face (19).

4. Groupe moto-ventilateur (1) selon l'une quelconque des revendications précédentes, dans lequel le moyen de découplage (20) présente une section en « H ».

## Patentansprüche

1. Gebläseeinheit (1) für eine Belüftungsanlage eines Fahrzeugs, umfassend:
- einen Träger (2), in welchem ein Elektromotor (3) aufgenommen ist, welcher eine Welle (10) aufweist, die sich entlang einer Längsachse (13) erstreckt, wobei die Welle (10) einen Bereich (25) umfasst, der geeignet ist, eine Turbine (4) aufzunehmen, wobei der Motor (3) eine Massenausgleichslinie (22) aufweist, die quer zur Längsachse (13) und durch einen Schwerpunkt (40) des Elektromotors verläuft, wobei der Träger (2) mit dem Motor (3) durch mehrere auf dem Umfang des Motors verteilte Entkopplungsmittel (20) verbunden ist, wobei die Längsposition (D2) wenigstens eines Entkopplungsmittels (20) in Bezug auf den Träger (2) und eine Abmessung (D3) dieses Entkopplungsmittels (20) entlang der Längsachse (13) in Bezug auf die Massenausgleichslinie (22) relativ zum Träger (2) bestimmt werden,
**dadurch gekennzeichnet, dass** der Träger (2) einen Rand (17) umfasst, welcher sich in einer Ebene (21) auf der Seite des Bereichs (25) in Bezug auf die Massenausgleichslinie (22) erstreckt, wobei die Massenausgleichslinie (22) und die Ebene (21) um einen Wert (D1) beabstandet sind, der zwischen 11 und 25 Millimetern liegt,
wobei ein Abstand entlang der Längsachse (13), welcher die Massenausgleichslinie (22) und eine Mittelebene (26) des Entkopplungsmittels (20) trennt, zwischen 0 und 7 Millimetern liegt, und wobei:
die Mittelebene (26) zwischen 0 und 5 Millimetern von der Massenausgleichslinie (22) entfernt ist,
wenn diese zwischen 11 und 18 Millimetern von der Ebene (21) entfernt ist, bei einem Gewicht des Elektromotors, das kleiner als 1000 g ist,
die Mittelebene (26) von der Massenausgleichslinie (22) um einen Wert beabstandet ist, der zwischen 2 und 6 Millimetern liegt, wenn die Massenausgleichslinie (22) von der Ebene (21) um einen Wert beabstandet ist, der zwischen 14 und 22 Millimetern liegt, bei einem Gewicht des Elektromotors, das zwischen 1000 g und 1100 g liegt,
die Mittelebene (26) von der Massenausgleichslinie (22) um einen Wert beabstandet ist, der zwischen 3 und 7 Millimetern liegt, wenn die Massenausgleichslinie (22) von der Ebene (21) um einen Wert beabstandet ist, der zwischen 17 und 25 Millimetern liegt, bei einem Gewicht des Elektromotors, das größer als 1100 g ist,
wobei sich die Mittelebene (26) auf der dem Bereich (25) gegenüberliegenden Seite in Bezug auf die Massenausgleichslinie (22) erstreckt,
- eine Turbine (4), die auf der Welle (10) des Elektromotors (3) angebracht ist;
wobei die Abmessung (D3) entlang der Längsachse (13) eine Länge des Entkopplungsmittels (20) bildet, die zwischen 15 und 40 Millimetern liegt, wobei die Länge (D3) des Entkopplungsmittels (20) zwischen 15 Millimetern und 25 Millimetern liegt, wenn die Massenausgleichslinie (22) des Elektromotors (3) 17 Millimeter oder weniger von der Ebene (21) entfernt ist,
wobei die Länge (D3) des Entkopplungsmittels (20) zwischen 18 Millimetern und 32 Millimetern liegt, wenn die Massenausgleichslinie (22) des Elektromotors (3) zwischen 17 und 22 Millimetern von der Ebene (21) entfernt ist,
wobei die Länge (D3) des Entkopplungsmittels (20) zwischen 23 Millimetern und 40 Millimetern liegt, wenn die Massenausgleichslinie (22) des Elektromotors (3) mehr als 22 Millimeter von der Ebene (21) entfernt ist.

2. Gebläseeinheit (1) nach Anspruch 1, welche drei Entkopplungsmittel (20) umfasst, die mit einem Winkelversatz von 120° verteilt sind.

3. Gebläseeinheit (1) nach einem der vorhergehenden Ansprüche, wobei das Entkopplungsmittel (20) ein Unterteil (14) mit einer Hülse (15) verbindet, in welcher der Elektromotor (3) aufgenommen ist, wobei die Hülse (15) eine erste Seite (15b) aufweist, welche sich entlang der Längsachse (13) erstreckt, wobei das Unterteil (14) eine zweite Seite (19) aufweist, welche sich entlang der Längsachse (13) erstreckt, wobei das Entkopplungsmittel (20) zwischen der ersten Seite (15b) und der zweiten Seite (19) angeordnet ist.

4. Gebläseeinheit (1) nach einem der vorhergehenden Ansprüche, wobei das Entkopplungsmittel (20) einen H-förmigen Querschnitt aufweist.

## Claims

1. Engine fans (1) for a fan installation of a vehicle comprising:
- a mount (2) in which is housed an electric motor (3) which has a shaft (10) extending along a longitudinal axis (13), the shaft (10) comprising a zone (25) capable of receiving a turbine (4), said motor (3) having a mass equilibrium line (22) transverse to the longitudinal axis (13) and passing through a centre of gravity (40) of the electric motor, said mount (2) being connected to the motor (3) by a plurality of decoupling means (20) distributed around the periphery of the motor, the longitudinal position (D2) with respect to the mount (2) of at least one decoupling means (20) and a dimension (D3) of said decoupling means (20) along the longitudinal axis (13) are determined with respect to the mass equilibrium line (22) relative to the mount (2), **characterized in that**
- said mount (2) comprising an edge (17) which extends in a plane (21) on the side of said zone (25) relative to the mass equilibrium line (22), in which the mass equilibrium line (22) and the plane (21) are spaced apart by a value (D1) of between 11 and 25 millimetres
- in which a distance along the longitudinal axis (13) which separates the mass equilibrium line (22) and a median plane (26) from the decoupling means (20) is between 0 and 7 millimetres, and in which:
- the median plane (26) is between 0 and 5 millimetres from the mass equilibrium line (22) when the latter is between 11 and 18 millimetres from the plane (21), the weight of the electric motor being less than 1000 g,
- the distance between the median plane (26) and the mass equilibrium line (22) is between 2 and 6 millimetres when the mass equilibrium line (22) is at a distance of between 14 and 22 millimetres from the plane (21), the weight of the electric motor being between 1000 g and 1100 g,
- the distance between the median plane (26) and the mass equilibrium line (22) is between 3 and 7 millimetres when the mass equilibrium line (22) is at a distance of between 17 and 25 millimetres from the plane (21), the weight of the electric motor being greater than 1100 g,
- the median plane (26) extending on the side opposing the zone (25) relative to the mass equilibrium line (22),
- a turbine (4) mounted on the shaft (10) of the electric motor (3);
- in which the dimension (D3) along the longitudinal axis (13) forms a length of the decoupling means (20) of between 15 and 40 millimetres,
- the length (D3) of the decoupling means (20) being between 15 millimetres and 25 millimetres when the mass equilibrium line (22) of the electric motor (3) is located 17 millimetres or less from the plane (21),
- the length (D3) of the decoupling means (20) being between 18 millimetres and 32 millimetres when the mass equilibrium line (22) of the electric motor (3) is located between 17 and 22 millimetres from the plane (21),
- the length (D3) of the decoupling means (20) being between 23 millimetres and 40 millimetres when the mass equilibrium line (22) of the electric motor (3) is located more than 22 millimetres from the plane (21).

2. Engine fans (1) according to Claim 1, comprising three decoupling means (20) distributed over an angular offset of 120º.

3. Engine fans (1) according to either one of the preceding claims, in which the decoupling means (20) connects a base (14) to a ring (15) in which the electric motor (3) is housed, said ring (15) having a first face (15b) which extends along the longitudinal axis (13), said base (14) having a second face (19) which extends along the longitudinal axis (13), the decoupling means (20) being interposed between the first face (15b) and the second face (19).

4. Engine fans (1) according to any one of the preceding claims, in which the decoupling means (20) has an H-shaped section.
